# EUROPEAN PATENT SPECIFICATION

(11) **EP 1 122 986 B1**
(45) Date of publication and mention of the grant of the patent: **04.06.2003**
(21) Application number: 00309402.6
(22) Date of filing: 25.10.2000
(51) Int. Cl.: H05B 41/00, H05B 41/36, H05B 41/392, H02J 9/06

(54) **An electronic ballast for a fluorescent lamp**
Elektronischer Ballast für Neonröhre
Ballast électronique pour lampe fluorescente

(30) Priority: 02.02.2000 CN 00204820 U
(43) Date of publication of application: 08.08.2001
(73) Proprietor: Mass Technology (H.K.) Ltd., Tsimshatsui, Kowloon, Hong Kong (CN)
(72) Inventor: Foo, Onn Fah, Tsimshatsui, Kowloon, Hong Kong (CN)
(74) Representative: Prentice, Raymond Roy

(56) References cited:
- US-A- 4 172 981
- US-A- 4 937 505
- US-A- 5 192 897

## Description

The invention relates to an electronic ballast for fluorescent lamps, particularly to an electronic ballast for a fluorescent lamp as used in an illumination light source with a power supply voltage lower than 15V.

At present, the commercially available electronic ballast for low pressure mercury vapor discharge fluorescent lamps (referred to as fluorescent lamps for short hereafter), such as 6V, 12V fluorescent lamp ballast consists generally of a push-pull high frequency oscillator, a transformer B and a capacitor C2, its circuit diagram being shown in Fig 1 (for example US 5192897). The fluorescent lamp ballast, through finely adjusting the turn ratio between the windings of the transformer B and adjusting the capacitor C2, can obtain a rather good match, so that the current peak coefficient of the lamp can be lower than 1.7. As compared with the incandescent lamp, it has higher light efficiency and a longer service life or ignition point life if used at a stable rated voltage. However, there are two serious drawbacks with this kind of circuit:-
1. When the voltage of the power supply drops 8% or more, the lamp tube cannot be started and ignited normally. This is because, when the voltage of the power supply drops, the high frequency voltage output of the high frequency oscillator in the electronic ballast has a greater drop and there is not sufficient energy for the lamp tube to be started. The hot point temperature of the cathode is not enough so that the normal arc discharge for starting ignition cannot be carried out. Especially, when the lamp is operated by a battery, after use for a not very long period, the voltage drops by about 20%. This is the reason why the emergency fluorescent lamp often fails to operate.
2. The start of the lamp belongs to cold cathode start. Therefore turning on or off of the lamp causes cathode sputtering and after switching some 1000 times, the cathode will be damaged, and the service life of the lamp tube is ended. This is far lower than the 6000 times of normal lamps. Therefore, there is a fatal weakness with the existing fluorescent lamp in that it requires variational range (fluctuation) of the power supply voltage to be narrow and the on-off turning number is too low.

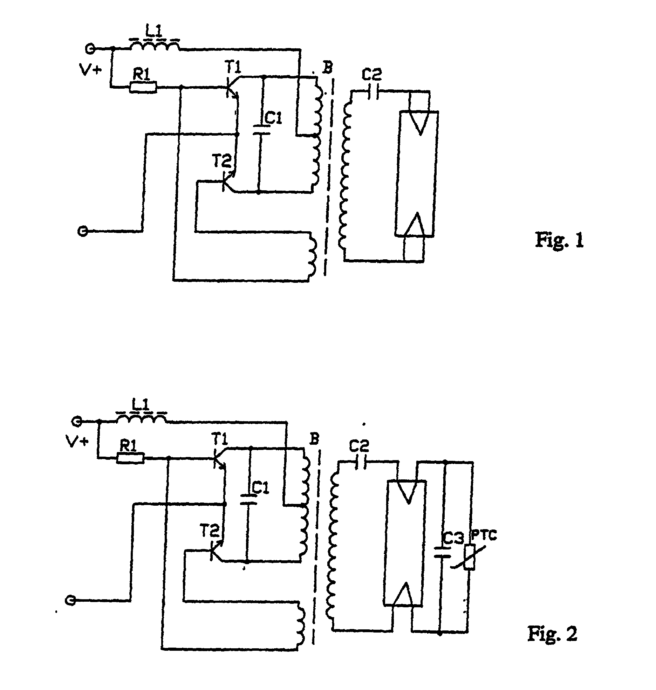

If a starting circuit is added for preheating the cathode according to the circuit of a 220V power supply (as shown in Fig 2), it will be more difficult for the fluorescent lamp to start at a low voltage due to the addition of a capacitor and heat sensitive resistor to the ends of the filament to it. Therefore such a circuit is not applicable.

US 4937505 relates to a discharge lamp energizing arrangement comprising a starter and a generator adapted to maintain the discharge current in the lamp. The generator includes a first circuit arranged to couple in series a DC voltage source, a first switch and a second switch. The starter is coupled in parallel to the lamp.

US 5192987 relates to a high frequency electronic ballast which comprises a variable frequency oscillator having its frequency controlled by inputs. Parallel to the lamp is connected a capacitor. US 5192897 discloses no starter.

The aim of the invention is to overcome the above-mentioned drawbacks and to provide an electronic ballast for a fluorescent lamp which can be used in an illumination lamp tube (light source) with the power supply voltage lower than 15V, and in which the starting voltage can be lowered and the cathode can be preheated before ignition of the lamp tube.

According to the invention, there is provided an electronic ballast for a fluorescent lamp which includes a lamp tube, a push-pull high frequency oscillator, a transformer, at least one capacitor and a starter having two ends which are connected to the two filament cathodes of the lamp tube, characterised in that the ballast further includes a path which is connected in parallel with the starter and which includes a pressure sensitive resistor and/or a heat sensitive resistor.

According to a preferred embodiment of the invention, the pressure sensitive resistor and the heat sensitive resistor are connected in series and connected in parallel to the two filament cathodes of the lamp tube.

Due to the fact that in the circuit of the invention, on the basis of the original push-pull high frequency oscillator, transformer and capacitor C, are added a starter, a pressure sensitive resistor and /or a heat sensitive resistor, the advantages are realized that the starting voltage of the lamp tube can be lowered, the cathodes of the lamp tube can be preheated before ignition, the lamp tube can be started and ignited normally even if the power supply voltage drops by 25% and the on-off turning number can relatively be raised up to 20000 times, and the light triggered efficiency as well as the service life can be improved.

The above-mentioned starter, pressure sensitive resistor and heat sensitive resistor are all well known to persons skilled in the art, therefore a detailed description of them is not given here.

In order to better understand the invention, in the following, the circuit and its operation principle will be described in detail with reference to the drawings, in which:-
Fig 1 is a circuit diagram of an existing electronic ballast for a fluorescent lamp;
Fig 2 is a circuit diagram of another existing electronic ballast for a fluorescent lamp;
Fig 3 is a circuit diagram of a first embodiment of an electronic ballast for a fluorescent lamp according to the invention;
Fig 4 is a circuit diagram of a second embodiment of an electronic ballast for a fluorescent lamp according to the invention;
Fig 5 is a circuit diagram of a third embodiment of an electronic ballast for a fluorescent lamp according to the invention; and
Fig 6 is a circuit diagram of a fourth embodiment of an electronic ballast for a fluorescent lamp according to the invention.

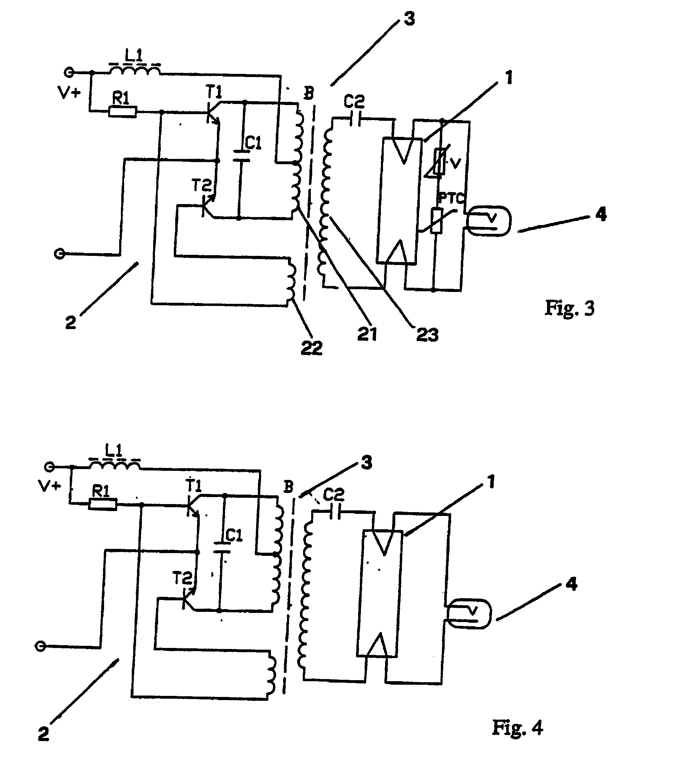

Referring to Fig 3 of the drawings the electronic ballast for a fluorescent lamp according to the invention includes a lamp tube 1, a push-pull high frequency oscillator 2, a transformer 3, a capacitor C2, a starter 4, a pressure sensitive resistor V and a heat sensitive resistor PTC, in which, to the left of the lamp tube 1 is a circuit consisting of the high frequency oscillator 2, transformer 3, capacitor C2 which is a commonly used circuit (if a A.C power supply is used, a rectifier is added to it). The push-pull high frequency oscillator 2 to the left of the lamp tube 1 includes a resistor R1, an induction coil L1, transistors T1 and T2 and a capacitor C1. The primary stage of the transformer 3 has a first winding 21 having a central tap and a second winding 22. The secondary stage of the transformer has only one secondary winding 23. One end of the resistor R1 and the induction coil L1 is respectively connected to the power supply V+, the base electrode of the transistor T1 and transistor T2 is connected respectively directly and through the winding 22 to the other end of the resistor R1. The collector of the transistors T1, T2 is respectively connected to the two ends of the first winding 21, and a capacitor C1 is connected between said ends of the winding 21. The central tap of the first winding 21 is connected to the other end of the high frequency induction coil L1. The capacitor C2 is serially connected between the lamp tube 1 and the secondary winding 23. The function of the circuit to the left of the lamp tube 1 is to provide a higher voltage with 20-40 kHz to the lamp tube 1. The circuit to the right of the lamp tube 1 consists of a starter 4, a pressure sensitive resistor V and a heat sensitive resistor PTC. The two ends of the starter 4 are respectively connected to the two filament cathodes of the lamp tube 1, the pressure sensitive resistor V and the heat sensitive resistor PTC are serially connected and are connected in parallel to the starter 4.

The operation principle of the circuit according to the invention is as follows:

When a high frequency voltage is supplied to the lamp tube 1, the glow discharge of the starter 4 occurs and the starter is turned on, the pressure sensitive resistor V and the heat sensitive resistor PTC are also turned on.

The initial electric current resulting from the on-states of the two above-mentioned loops (paths) preheats the filament cathodes for the first time, after 0.4-1 seconds, when the starter 4 is closed and short-circuited due to the temperature rise of the movable thin piece of the starter, the second preheating current results and preheats the cathodes for the second time, after 0.1-0.3 seconds, a high voltage is formed with the jumping apart of the movable thin piece of the starter 4 due to the drop in its temperature. The high voltage plus the double preheating to the cathodes causes the lamp tube 1 to enter into arc discharge and to be ignited. Furthermore, if the voltage of the power supply drops by 25%, the lamp tube can still be started and ignited normally.

In the above-mentioned embodiment, if the pressure sensitive resistor V and heat sensitive resistor PTC with appropriate parameters are used, the voltage necessary to start the lamp tube 1 can be lowered to 450V from 600V, thus protecting the cathodes, and the on-off fuming number or times of the lamp tube 1 can reach a high level of 20,000 times. In addition, when the lamp tube 1_is ignited normally, the voltage across the two ends of the lamp tube 1 can be lowered to about 60V which is far below the conductive voltage of the pressure sensitive resistor and the glow discharge voltage of the starter. Therefore, no current flows through the serial loop of the pressure sensitive resistor V and heat sensitive resistor PTC, and no consumption occurs whereby a high light triggered efficiency is achieved. By contrast, the working or operating frequency of the existing electronic ballast for fluorescent lamps is rather high and when the power supply is supplied to it, the cold cathode glow discharge immediately occurs and now the high voltage is present, this high voltage can damage the cathodes of the lamp tube 1.

As shown in Fig 3, the tested parameters of the fluorescent lamp using the electronic ballast according to the invention and the lamp tube with a nominal power of 11 watts are shown in Table 1.

**Table 1**

| Voltage of power supply | Power | The lowest starting & operating voltage: | Maximum normal operating voltage | The on-off turning number |
|---|---|---|---|---|
| DC 12V | 11W | 9V | 15V | 20,000 times |
| Light triggered efficiency: | Operating frequency | Current peak coefficient of the lamp tube | | |
| 55LM/W | 30KHz | 1.6 | | |

Fig 4 shows a simplified circuit compared to Fig 3 in that only a starter 4 is added to the commonly used circuit consisting of a push-pull high frequency oscillator 2, a transformer 3 and a capacitor C2, the two electrodes or ends of said starter 4 being connected respectively to the two cathodes of the lamp tube 1.

The simplified circuit can be used in some applications in which only a moderate on-off turning number of the lamp is required, such as only 4000 times are required, to lower the cost. When the power supply is provided to this circuit, the glow discharge occurs to the starter 4 and the lamp tube 1 immediately, the voltage across the two ends of the lamp tube 1 is about 550-600V (without the starter 4, the voltage across the two ends will be more than 900V). Therefore the starter 4 plays a role of lowering the voltage, protecting the cathodes against damage to a certain extent, so that the on-off fuming number can reach 4000. With this circuit, when the power supply voltage drops by 25%, the lamp tube 1 can still be started and ignited normally.

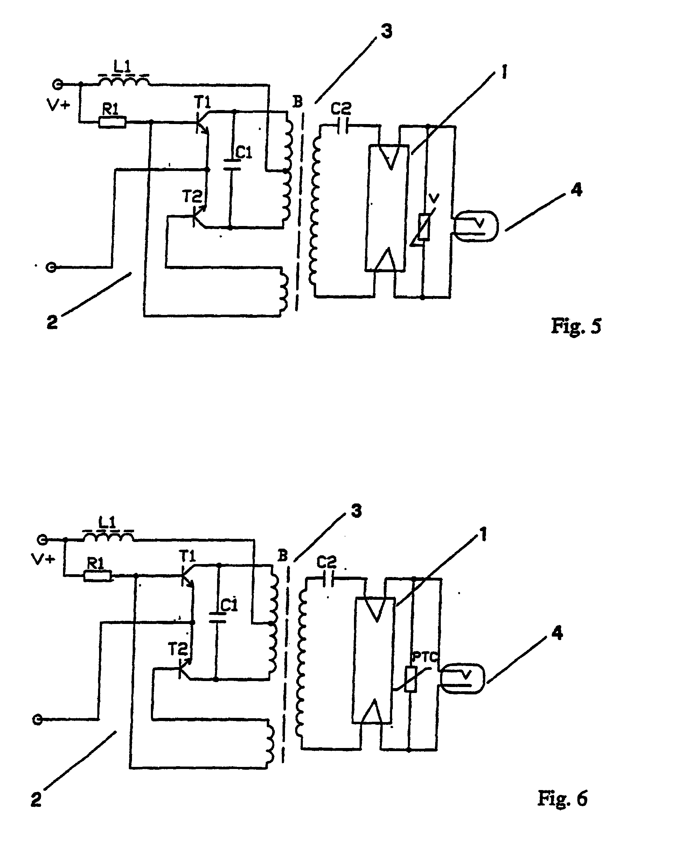

Reference will now be made to Fig 5 and Fig 6, in which the circuits of the third and the fourth embodiments according to the invention are shown. In these circuits a pressure sensitive resistor V or a heat sensitive resistor PTC is added to the simplified circuit consisting of the push-pull high frequency oscillator 2, transformer 3, capacitor C2 and starter 4 in the second embodiment The pressure sensitive resistor V or the heat sensitive resistor PTC together with the starter 4, is connected in parallel to the two filament cathodes of the lamp tube 1. For their effects, please refer to the above-mentioned description.

## Claims

1. An electronic ballast for a fluorescent lamp, including a lamp tube (1), a push-pull high frequency oscillator (2), a transformer (3), at least one capacitor (C1, C2) and a starter (4) having two ends which are connected to the two filament cathodes of the lamp tube (1), **characterised in that** the ballast further includes a path which is connected in parallel with the starter (4) and which includes a pressure sensitive resistor (V) and/or a heat sensitive resistor (PTC).

2. An electronic ballast for a fluorescent lamp according to Claim 1, **characterised in that** said pressure sensitive resistor (V) and said heat sensitive resistor (PTC) are connected in series and are connected in parallel with the two filament cathodes of the lamp tube (1).

## Patentansprüche

1. Elektronisches Vorschaltgerät für eine Leuchtstoffröhre, umfassend eine Leuchtkörper-Röhre (1), einen Gegentakt-Hochfrequenz-Oszillator (2), einen Transformator (3), mindestens einen Kondensator (C1, C2) und einen Starter (4) mit zwei Enden, die mit den zwei Glühfaden-Kathoden der Leuchtkörper-Röhre (1) verbunden sind, **dadurch gekennzeichnet, dass** das Vorschaltgerät ferner einen Pfad aufweist, welcher parallel zu dem Starter 4 geschaltet ist, und welcher einen druckempfindlichen Widerstand (V) und/oder einen wärmeempfindlichen Widerstand (PTC) aufweist.

2. Vorschaltgerät für eine Leuchtstoff-Röhre gemäß Anspruch 1, **dadurch gekennzeichnet, dass** der druckempfindliche Widerstand (V) und der wärmeempfindliche Widerstand (PTC) in Reihe geschaltet sind und parallel zu den zwei Glühfaden-Kathoden der Leuchtkörper-Röhre (1) geschaltet sind.

## Revendications

1. Ballast électronique destiné à une lampe fluorescente, comprenant un tube de lampe (1), un oscillateur à haute fréquence symétrique (2), un transformateur (3), au moins un condensateur (C1, C2) et un starter (4) ayant deux extrémités qui sont reliées aux deux cathodes à filaments du tube de lampe (1), **caractérisé en ce que** le ballast comprend en outre une ligne qui est reliée en parallèle au starter (4) et qui comprend une résistance sensible à la pression (V) et/ou une résistance sensible à la chaleur (PTC).

2. Ballast électronique destiné à une lampe fluorescente selon la revendication 1, **caractérisé en ce que** ladite résistance sensible à la pression (V) et ladite résistance sensible à la chaleur (PTC) sont reliées en série et sont reliées en parallèle aux deux cathodes à filaments du tube de lampe (1).
